Europäisches Patentamt

(19) European Patent Office

Office européen des brevets

(11) Publication number: **0 299 557 B1**

## EUROPEAN PATENT SPECIFICATION

(45) Date of publication of patent specification :
23.10.91 Bulletin 91/43

(51) Int. Cl.⁵: **A01K 11/00, G01S 13/00**

(21) Application number: **88201358.4**

(22) Date of filing: **30.06.88**

(54) Identification system for stock farms.

(30) Priority: **01.07.87 NL 8701541**

(43) Date of publication of application:
**18.01.89 Bulletin 89/03**

(45) Publication of the grant of the patent:
**23.10.91 Bulletin 91/43**

(84) Designated Contracting States:
**DE FR GB IT NL SE**

(56) References cited:
**NL-A- 7 810 245**

(73) Proprietor: **N.V. Nederlandsche
Apparatenfabriek NEDAP
Oude Winterswijkseweg 7
NL-7141 DE Groenlo (NL)**

(72) Inventor: **Hogen Esch, Johannes Harm Lukas
Hoge Veld 75
NL-7122 ZN Aalten (NL)**

(74) Representative: **Smulders, Theodorus A.H.J.,
Ir. et al
Vereenigde Octrooibureaux Nieuwe Parklaan
107
NL-2587 BP 's-Gravenhage (NL)**

## Description

This invention relates to an identification system, in particular one suitable for stock farms, comprising a transmitter/receiver for generating an electromagnetic interrogation field in a detection zone and for receiving an identification signal generated by a responder; a plurality of coded implantable responders capable of generating an identification signal in response to an electromagnetic interrogation field, each coded responder, in operation, being implanted in an individual animal and being capable of generating in a relatively small area of operation a unique identification signal associated with such animal.

An identification system using coded responders, and specifically a responder circuit for such a system, is described, for example, in our NL-C-176,404. A responder provided with such a circuit, when activated by an electromagnetic interrogation field, can generate a unique code, for example, a nummerical code, which is converted into an identification signal that can be received by the transmitter/receiver or by a separate receiver. According to a subsequent development, described, for example, in our NL-A-86,01021, such a responder may comprise a reprogrammable memory means, so that the original code can be changed and/or supplemented with new data.

To identify farm animals, for example pigs and cows, earmarks are often used nowadays. In the various stock farming branches, different earmarks are used, which exhibit differences in execution and method of attachment. The nature of the information provided by an earmark may also exhibit differences. In addition to the prescribed earmarks, the animals are mostly additionally provided with an electronic label or responder, which is attached to the animal by means of a collar and serves for the remote identification of animals by various automatic systems, such as systems for feeding, separating, automatic milking and other stock managing systems.

Further, in NL-A-7810245, an identification system of the kind described above, using implantable coded responders, has been disclosed. Because of the rather small area of operation of the implanted responders it is difficult to detect in a reliable manner such an implanted responder and its code.

It is an object of the present invention to integrate all identification systems nowadays used into one universal system, in which the animals are provided with a unique life number which can serve for both the identification and registration prescribed by the Government and the remote identification for automatic apparatuses at the farm, on market places, during transport and in the slaughter-house. As earmarks are not infrequently lost, for example by being scraped along obstacles, they do not guarantee a foolproof system in which the life number is indissolubly connected with the animal. In addition, an earmark number is not insensitive to fraud, because it can be transferred to another animal with a greater or lesser amount of effort.

According to the present invention, an identification system of the above kind is characterized in that there is further provided for each animal a transponder, attachable to the animal, which transponder, in operation, is disposed in the area of operation of the coded responder of the animal and comprises an electric circuit which in response to the interrogation field generated by the transmitter/receiver is capable of generating a second interrogation field, which second interrogation field is capable of activating the implantable responder.

The transponder accordingly serves as an intermediate station effecting the electromagnetic coupling between the transmitter/receiver and the implantable responder. As a consequence, the implantable responder can be made sufficiently small for it to be actually implanted in a simple manner, for example, with a simple injection tool. Such an implantable responder may, for example, be 2 mm in diameter and 15 mm long. It is clear that, with such small dimensions, the coil present in the responder is also very small, so that the area of operation of the responder is small too. As the interrogation field of a remote transmitter/receiver necessarily has a low concentration near the responder, the responder itself is unable to directly influence the interrogation field to a sufficient extent. For this reason the present invention employs an intermediate station, i.e., the transponder, which provides an effective electromagnetic coupling with both the transmitter/receiver and the responder.

The transponder may be attached to the animal, for example, by means of a collar, but may alternatively take the form of an earmark. The information stored in the responder preferably comprises at least the life number of the animal. This life number is advantageously also provided on the outside of the transponder to enable visual inspection.

If the earmark should be lost, from scraping or otherwise, the implanted responder with the life number stored electronically therein will remain, and the coupling to bridge larger distances can be re-established by providing a fresh earmark. Accordingly, the earmarks may be identical in an electical sense, and differ exclusively in the visual numbers carried by them.

It is noted that the use of an implantable responder is known per se, for example, from NL-A-78,10245.

Some embodiments of the invention will now be described, by way of example, with reference to the accompanying diagrammatic drawings. In said drawings,

Fig. 1 shows an example of apparatus according to the present invention;

Fig. 2 shows a variant of a part of Fig. 1;

Figs. 3-5 show some embodiments of active transponder circuits.

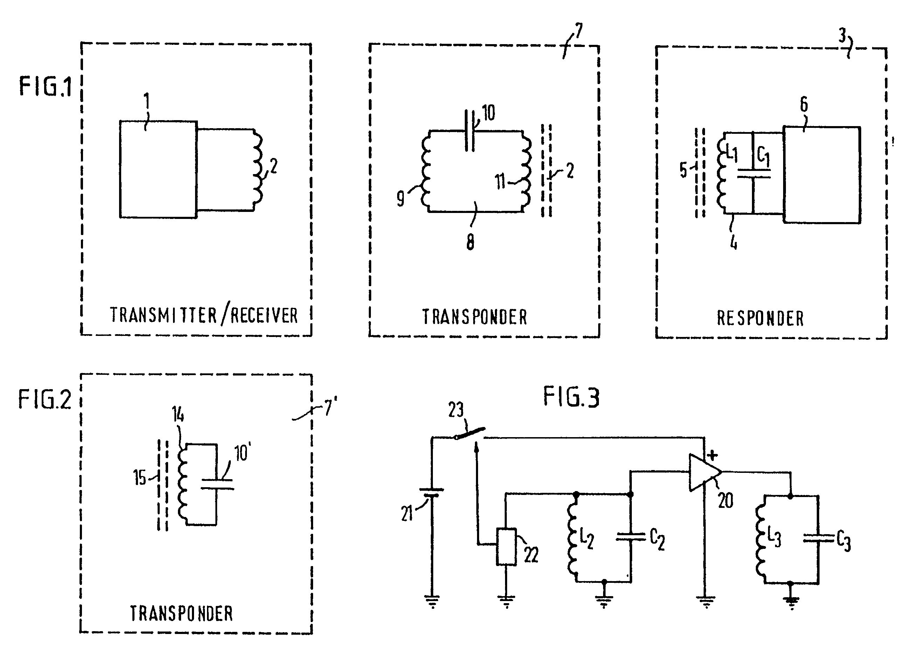

Fig. 1 diagrammatically shows an example of apparatus according to the present invention. As shown, the apparatus comprises a transmitter/receiver 1 comprising a transmission coil 2, by means of which, in operation, an electromagnetic interrogation field can be generated with a pre-determined, suitable frequency. In principle, any transmitter/receiver of an electromagnetic stock identification system can be used. Such identification systems are at present commercially available in various forms from various manufacturers.

Fig. 1 further shows an implantable responder 3 comprising a receiver circuit 4 including a coil $L_1$ and a capacitor $C_1$. The coil may be wound on a ferrite rod 5. Receiver circuit 4 is connected to a code circuit 6 comprising active electronic components which in known manner, in operation, receive supply voltage and control signals from the receiver circuit. A suitable responder is described, for example, in US-A-4,196,418.

The responder can only be activated if the field strength of the interrogation field which in operation is generated by the transmitter/receiver is sufficiently high near the responder. This means that the number of field lines comprised by coil $L_1$ should be sufficiently large for inducing an A.C. voltage across the LC circuit 4 of such a value that the supply voltage required for an effective operation of the active electronic components of the code circuit can be derived from it.

As, according to this invention, the responder takes the form of an implantable responder with minimum outside dimensions, coil $L_1$ can only comprise a small number of field lines of the interrogation field, if the transmitter/receiver is placed at the usual distance from the animals to be identified.

For this reason, according to this invention, an intermediate station 7 is used which is referred to herein as a transponder. In operation, the transponder is arranged in the vicinity of the implanted responder and, in response to the interrogation field of transmitter/receiver 1 generates a sufficiently strong field near the responder coil $L_1$ to activate the responder. For this purpose the transponder itself should have a receiver coil large enough to comprise a large number of field lines of the interrogation field.

In the example shown, transponder 7 comprises an LC circuit with a receiver coil 9, a capacitor 10 and a second coil 11 which may be provided with a ferrite rod 12 and is capable of transmitting energy to the receiver circuit 4 of the responder electromagnetically, i.e., in a wireless manner. Like circuit 4, circuit 8 is tuned to the frequency of the transmitter/receiver. Similarly, the identification signals generated by responder 3 can be transmitted through transponder 7 to the transmitter/receiver.

The responders to be implanted preferably comprise a housing made of a material, or provided with a layer of material, which after implantation coalesces with the animal tissue. This discourages the fraudulent removal of the responder, and further promotes that the responder remains at the position originally selected for it. Suitable materials are polyethylene vinyl acetate (EVA), PMMA, a layer of Teflon (a registered trademark), and silicone rubber.

The transponder may be attached to an animal in various ways. Thus, for example, the transponder may be made similarly to the conventional collar transponders. The transponder may alternatively take the form of an earmark. The responder is then implanted in the animal's ear.

In all cases the transponder may advantageously be provided with a visual marking of the identity of the animal, e.g., its life number.

The code circuit 6 of the responder preferably also contains the life number or a similar unique identifying indication. If desired, additional information may be contained in the code circuit. Such other information may or may not be variable by wireless means.

In case the transponder is damaged or becomes lost, the implanted responder can be activated, if necessary, by means of a special transmitter/receiver to be hand carried in the vicinity of the responder to determine its code. The provision of a new transponder, too, is in principle a very simple matter, as all transponders may be identical both electrically and mechanically.

It is noted that, as an alternative, the transponder could comprise a single coil. Such a single coil may or may not be provided with a ferrite rod.

Fig. 2 diagrammatically shows such a transponder 7' with a single coil 14 and a ferrite rod 15.

Furthermore, if desired, it is possible for the transponder to be provided with an active electronic circuit supplied with energy from a battery. The transponder can then function as an active amplifier in the path between transmitter/receiver and responder. In that case the transponder is preferably designed so that it is only activated in the presence of an interrogation field with the correct frequency. In this way the battery is only switched on when actually needed. As the transponder is of easy access, the battery may be mounted so as to be replaceable.

Advantageously, the active transponder may be arranged so that when the battery is exhausted, the transponder operates in the passive mode described before.

One embodiment of an active transponder is shown diagrammatically in Fig. 3. As shown, the transponder circuit comprises an input circuit $L_2C_2$, an amplifier 20 and an output circuit $L_3C_3$. The input circuit effects the electromagnetic coupling with the interrogation field, and the output circuit serves for the electromagnetic coupling with the responder. The amplifier 20 receives supply voltage from battery 21.

The circuit arrangement is such in this example that the battery is only connected to the supply terminals of the amplifier if the transponder is in an interrogation field with the correct frequency and with a sufficient strength. In this manner the service life of the battery is considerably prolonged. The frequency selection takes place automatically as the input circuit $L_2C_2$ is a resonance circuit attuned to the frequency of the interrogation field. The voltage induced across the resonance circuit is compared by means of a comparator 22 with a predetermined fixed threshold value. As soon as the threshold value is exceeded, a switching device 23 is closed, and the amplifier is provided with supply voltage, so that the input signal appears across the output circuit in an amplified value.

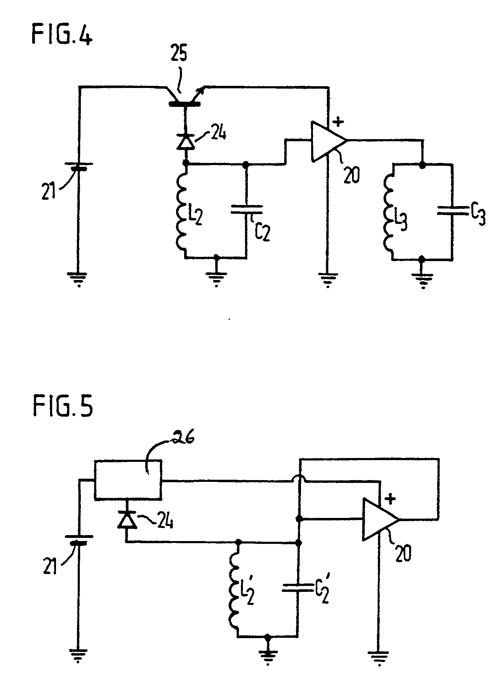

Fig. 4 shows a further elaboration of Fig. 3, in which comparator 22 and switch 23 take the form of a rectifier, in this case a single diode 24, which rectifies the voltage induced across input circuit $L_2C_2$, and passes it to a control electrode of a semiconductor switch 25, such as a transistor or a thyristor. As soon as the voltage on the control electrode exceeds a pre-determined value, the switch is closed.

It is noted that an electromagnetic coupling can be effected between $L_2$ and $L_3$, which may lead to oscillations in the transponder. To prevent such oscillations, coils $L_2$ and $L_3$ should be so disposed relatively to each other as to exclude their being electromagnetically coupled. For this purpose, for example, the coils may be mounted transversely to each other.

Alternatively, the transponder circuit may be allow to oscillate. In that case, however, a timer should be used to terminate the oscillation effect after a pre-determined time interval.

Fig. 5 shows a transponder circuit provided with a timer 26, in which, at the same time, the output circuit is combined with the input circuit, so that only a single circuit $L_2,C_2$, is present. The timer may, for example, comprise a Schmitt trigger, or a binary counter which afert a pre-determined time interval breaks the connection between battery 21 and amplifier 20.

It is noted that, if desired, the transponder may be provided with a code circuit which may or may not be re-programmable, similarly to the coded responders of the prior art. The code of such a coded transponder may or may not correspond, either in full or in part, with the code recorded in the implanted responder.

It is possible to use a coded transponder for all ordinary or usual identification purposes and the implanted responder only in particular circumstances, for example, when the transponder is damaged or if it is desired to check the code of the transponder, in which case it can be read with an interrogation field generated in the vicinity of the responder.

## Claims

1. An identification system, in particular one suitable for stock farms, comprising a transmitter/receiver for generating an electromagnetic interrogation field in a detection zone and for receiving an identification signal generated by a responder ; and a plurality of coded implantable responders capable of generating an identification signal in response to an electromagnetic interrogation field, each coded responder being, in operation, implanted in a specific animal and being capable of generating in a relatively small area of operation an identification signal associated with that animal, characterized in that there is provided for each animal a transponder (7 ; 7′) attachable to such animal, which transponder (7 ; 7′) is, in operation, disposed in the area of operation of the coded responder (3) of the animal, and comprises an electrical circuit (8) which, in response to the interrogation field generated by the transmitter/receiver (1), is capable of generating itself a second interrogation field, which second interrogation field is capable of activating the implantable responder (3).

2. An identification system as claimed in claim 1, characterized in that at least one transponder (7 ; 7′) is provided with a visual identifying indication.

3. An identification system as claimed in claim 1 or 2, characterized in that at least one transponder (7 ; 7′) takes the form of an earmark.

4. An identification system as claimed in claim 1 or 2, characterized in that at least one transponder (7 ; 7′) is provided with a collar for an animal to be identified.

5. An identification system as claimed in any of the preceding claims, characterized in that the electrical circuit (8 ; 10′, 14) of the transponders (7 ; 7′) is a passive circuit comprising at least one coil (9, 11 ; 14) tuned to the interrogation field.

6. An identification system as claimed in any of claims 1-4, characterized in that the electrical circuit (8 ; 10′, 14) of the transponder comprises a tuned circuit with at least one coil (9, 11 ; 14) mounted on a ferrite rod (12 ; 15).

7. An identification system as claimed in any of claim 1-4, characterized in that the electrical circuit of at least one transponder (7 ; 7′) comprises a batteryfed active amplifier (20).

8. An identification system as claimed in claim 7, characterized by detection means ($L_2$, $C_2$, 22) provided in said at least one transponder (7 ; 7′), said detection means being activated by an interrogation field with a pre-determined frequency to effect an electric coupling of the battery (21) with the amplifier (20).

9. An identification system as claimed in claim 7 or 8, characterized in that said at least one transponder (7 ; 7′) is arranged so that with an exhausted battery it operates as a passive responder.

10. An identification system as claimed in any of the preceding claims, characterized in that the coded responders (3) are arranged so that the code of the coded responders is at least partially reprogrammable by wireless means.

11. An identification system as claimed in any of the preceding claims, characterized in that the implantable responders (3) are mounted in a housing whose outer surface consists of a material capable of coalescing with the tissue of the animal.

12. An identification system as claimed in any of the preceding claims, characterized in that at least one transponder (7 ; 7') is provided with its own code circuit which under the influence of a suitable interrogation field generates a code signal.

13. An identification system as claimed in any of Claims 8-12, characterized in that said at least one transponder comprises a first LC circuit ($L_2C_2$) acting as an input circuit, and a second LC circuit ($L_3C_3$) acting as an output circuit, the input circuit being connected to the input of the amplifier (20), and the output circuit being connected to the output of the amplifier ; and that the detection means comprise a threshold value detector (22 ; 24) connected to the input circuit.

14. An identification system as claimed in claim 13, characterized in that the connection between the battery (21) and one of the supply terminals of the amplifier (20) comprises a semiconductor switch element (25) with a control electrode.

15. An identification system as claimed in claim 14, characterized in that the control electrode is connected through a rectifier (24) to the input circuit ($L_2C_2$).

16. An identification system as claimed in any of claims 13-15, characterized in that the input circuit and the output circuit have at least one coil in common.

17. An identification system as claimed in any of claims 13-16, characterized by the provision of a timer (26) in the connection between the battery (21) and the amplifier (20), which timer breaks the connection after a pre-determined time interval.

18. An identification system as claimed in claim 17, characterized in that the timer also functions as a threshold value detector and as a switch.

## Patentansprüche

1. Identifikationssystem, insbesondere ein für Viehhaltungsbetriebe geeignetes Identifikationssystem mit einem Sender/Empfänger zum Erzeugen eines elektromagnetischen Abfragefeldes in einer Erkennungszone und zum Empfangen eines von einem Responder erzeugten Identifikationssignals ; und mehreren kodierten implantierbaren Respondern, die in der Lage sind, ein Identifikationssignal in Reaktion auf ein elektromagnetisches Abfragefeld zu erzeugen, wobei jeder kodierte Responder beim Betrieb in ein bestimmtes Tier implantiert und in der Lage ist, in einem relativ kleinen Wirkungsbereich ein diesem Tier zugeordnetes Identifikationssignal zu erzeugen, dadurch gekennzeichnet, daß für jedes Tier ein an diesem anbringbarer Transponder (7 ; 7') vorgesehen ist, wobei der Transponder (7 ; 7') beim Betrieb im Wirkungsbereich des kodierten Responders (3) des Tieres angeordnet ist und eine elektrische Schaltung (8) aufweist, die in der Lage ist, in Reaktion auf das von dem Sender/Empfänger (1) erzeugte Abfragefeld selbst ein zweites Abfragefeld zu erzeugen, welches in der Lage ist, den implantierbaren Responder (3) zu aktivieren.

2. Identifikationssystem nach Anspruch 1, dadurch gekennzeichnet, daß wenigstens ein Transponder (7 ; 7') mit einer visuellen Identifikationsmarkierung versehen ist.

3. Identifikationssystem nach Anspruch 1 oder 2, dadurch gekennzeichnet, daß wenigstens ein Transponder (7 ; 7') die Form einer Ohrmarke aufweist.

4. Identifikationssystem nach Anspruch 1 oder 2, dadurch gekennzeichnet, daß wenigstens ein Transponder (7 ; 7') mit einem Kragenband für ein zu identifizierendes Tier versehen ist.

5. Identifikationsvorrichtung nach einem der vorhergehenden Ansprüche, dadurch gekennzeichnet, daß die elektrische Schaltung (8 ; 10', 14) der Transponder (7 ; 7') eine passive Schaltung mit wenigstens einer auf das Abfragefeld abgestimmten Spule (9, 11; 14) ist.

6. Identifikationsvorrichtung nach einem der Ansprüche 1-4, dadurch gekennzeichnet, daß die elektrische Schaltung (8 ; 10', 14) des Transponders eine abgestimmte Schaltung mit wenigstens einer an einem Ferritstab (12 ; 15) angebrachten Spule (9, 11; 14) aufweist.

7. Identifikationsvorrichtung nach einem der Ansprüche 1-4, dadurch gekennzeichnet, daß die elektrische Schaltung mindestens eines Transponders (7 ; 7') einen batteriegespeisten aktiven Verstärker (20) aufweist.

8. Identifikationssystem nach Anspruch 7, gekennzeichnet durch in dem wenigstens einen Transponder (7 ; 7') vorgesehene Erkennungseinrichtungen ($L_2$, $C_2$, 22), die durch ein Abfragefeld mit einer vorbestimmten Frequenz aktiviert werden, um eine elektrische Verbindung zwischen der Batterie (21) und dem Verstärker (20) herzustellen.

9. Identifikationssystem nach Anspruch 7 oder 8, dadurch gekennzeichnet, daß der wenigstens eine Transponder (7 ; 7') derart ausgelegt ist, daß er bei verbrauchter Batterie als passiver Responder arbeitet.

10. Identifikationsvorrichtung nach einem der vorhergehenden Ansprüche, dadurch gekennzeichnet, daß die kodierten Responder (3) derart ausgebildet sind, daß der Kode der kodierten Responder wenigstens teilweise durch drahtlose Einrichtungen reprogrammierbar ist.

11. Identifikationsvorrichtung nach einem der vorhergehenden Ansprüche, dadurch gekennzeichnet, daß die implantierbaren Responder (3) in einem Gehäuse angebracht sind, dessen Außenfläche aus einem Material besteht, das in der Lage ist, mit dem Gewebe des Tieres zu verwachsen.

12. Identifikationsvorrichtung nach einem der vorhergehenden Ansprüche, dadurch gekennzeichnet, daß wenigstens ein Transponder (7 ; 7') mit einer eigenen Kodeschaltung versehen ist, die unter dem Einfluß eines geeigneten Abfragefelds ein Kodesignal erzeugt.

13. Identifikationsvorrichtung nach einem der Ansprüche 8-12, dadurch gekennzeichnet, daß der wenigstens eine Transponder eine als Eingangsschaltung wirkende erste LC-Schaltung ($L_2$, $C_2$) und eine als Ausgangsschaltung wirkende zweite LC-Schaltung ($L_3$, $C_3$) aufweist, wobei die Eingangsschaltung mit dem Eingang des Verstärkers (20) und die Ausgangsschaltung mit dem Ausgang des Verstärkers verbunden ist ; und daß die Erkennungseinrichtungen einen mit der Eingangsschaltung verbundenen Schwellenwertdetektor (22 ; 24) aufweisen.

14. Identifikationssystem nach Anspruch 13, dadurch gekennzeichnet, daß die Verbindung zwischen der Batterie (21) und einem der Versorgungsanschlüsse des Verstärkers (20) ein Halbleiterschaltelement (25) mit einer Steuerelektrode aufweist.

15. Identifikationssystem nach Anspruch 14, dadurch gekennzeichnet, daß die Steuerelektrode über einen Gleichrichter (24) mit der Eingangsschaltung ($L_2$, $C_2$) verbunden ist.

16. Identifikationsvorrichtung nach einem der Ansprüche 13-15, dadurch gekennzeichnet, daß die Eingangsschaltung und die Ausgangsschaltung wenigstens eine gemeinsame Spule haben.

17. Identifikationsvorrichtung nach einem der Ansprüche 13-16, dadurch gekennzeichnet, daß in der Verbindung zwischen der Batterie (21) und dem Verstärker (20) ein Zeitgeber (26) vorgesehen ist, der die Verbindung nach einem vorbestimmten Zeitintervall unterbricht.

18. Identifikationssystem nach Anspruch 17, dadurch gekennzeichnet, daß der Zeitgeber ebenfalls als Schwellenwertdetektor und als Schalter wirkt.

**Revendications**

1. Système d'identification, en particulier un système d'identification approprié pour des fermes d'élevage, comprenant un émetteur/récepteur pour produire un champ d'interrogation électromagnétique dans une zone de détection et pour recevoir un signal d'identification produit par un répondeur ; et une pluralité de répondeurs implantables codés pouvant produire un signal d'identification en réponse à un champ d'interrogation électromagnétique, chaque répondeur codé étant, en exploitation, implanté dans un animal spécifique et pouvant produire dans une surface relativement petite d'exploitation un signal d'identification associé à cet animal, caractérisé en ce qu'il est prévu pour chaque animal un transpondeur (7 ; 7') fixable à cet animal, lequel transpondeur (7 ; 7') est, en exploitation, disposé dans la surface d'exploitation du répondeur codé (3) de l'animal, et comprend un circuit électrique (8) qui, en réponse au champ d'interrogation produit par l'émetteur/récepteur (1) peut produire lui-même un second champ d'interrogation, lequel second champ d'interrogation peut activer le répondeur implantable (3).

2. Système d'identification selon la revendication 1, caractérisé en ce qu'au moins un transpondeur (7 ; 7') est prévu avec une indication d'identification visuelle.

3. Système d'identification selon la revendication 1 ou 2, caracterisé en ce qu'au moins un transpondeur (7 ; 7') se présente sous la forme d'une marque d'oreille.

4. Système d'identification selon la revendication 1 ou 2, caractérisé en ce qu'au moins un transpondeur (7 ; 7') est prévu avec un collier pour un animal qui doit être identifié.

5. Système d'identification selon l'une quelconque des revendications précédentes, caractérisé en ce que le circuit électrique (8 ; 10', 14) des transpondeurs (7 ; 7') est un circuit passif comprenant au moins une bobine (9, 11 ; 14) accordée au champ d'interrogation.

6. Système d'identification selon l'une quelconque des revendications 1 à 4, caractérisé en ce que le circuit électrique (8 ; 10', 14) du transpondeur comprend un circuit accordé avec au moins une bobine (9, 11 ; 14) montée sur un bâtonnet de ferrite (12 ; 15).

7. Système d'identification selon l'une quelconque des revendications 1 à 4, caractérisé en ce que le circuit électrique d'au moins un transpondeur (7 ; 7') comprend un amplificateur actif alimenté par pile (20).

8. Système d'identification selon la revendication 7, caractérisé par un moyen de détection ($L_2$, $C_2$, 22) prévu dans ledit au moins un transpondeur (7 ; 7') ledit moyen de détection étant active par un champ d'interrogation à une fréquence prédéterminée pour effectuer un couplage électrique de la pile (21) avec l'amplificateur (20).

9. Système d'identification selon la revendication 7 ou 8, caractérisé en ce que ledit au moins un transpondeur (7 ; 7') est disposé de sorte qu'avec une pile enlevée, il fonctionne comme un répondeur passif.

10. Système d'identification selon l'une quelconque des revendications précédentes, caractérisé en ce que les répondeurs codés (3) sont disposés de sorte que le code des répondeurs codés est au moins partiellement reprogrammable par un moyen radio.

11. Système d'identification selon l'une quelconque des revendications précédentes, caractérisé en ce que les répondeurs implantables (3) sont montés dans un boîtier dont la surface extérieure est constituée d'un matériau pouvant s'assimiler aux tissus de l'animal.

12. Système d'identification selon l'une quelconque des revendications précédentes, caractérisé en ce qu'au moins un transpondeur (7 ; 7') est prévu avec son propre circuit de code qui sous l'influence d'un champ d'interrogation approprié produit un signal de code.

13. Système d'identification selon l'une quelconque des revendications 1 à 12, caractérisé en ce que ledit au moins un transpondeur comprend un premier circuit LC ($L_2C_2$) agissant comme un circuit d'entrée, et un second circuit LC ($L_3C_3$) agissant comme un circuit de sortie, le circuit d'entrée étant relié à l'entrée de l'amplificateur (20) et le circuit de sortie étant relié à la sortie de l'amplificateur ; et en ce que le moyen de détection comprend un détecteur de valeur de seuil (22 ; 24) relié au circuit d'entrée.

14. Système d'identification selon la revendication 13, caracterisé en ce que la liaison entre la pile (21) et une des bornes d'alimentation de l'amplificateur (20) comprend un élément d'interrupteur à semiconducteur (25) avec une électrode de commande.

15. Système d'identification selon la revendication 14, caractérisé en ce que l'électrode de commande est reliée à travers un redresseur (24) au circuit d'entrée ($L_2C_2$).

16. Système d'identification selon l'une quelconque des revendications 13 à 15, caractérisé en ce que le circuit d'entrée et le circuit de sortie ont au moins une bobine en commun.

17. Système d'identification selon l'une quelconque des revendications 13 à 16, caractérisé par la fourniture d'un temporisateur (26) dans la liaison entre la pile (21) et l'amplificateur (20), lequel temporisateur coupe la liaison après un intervalle de temps prédéterminé.

18. Système d'identification selon la revendication 17, caractérisé en ce que le temporisateur fonctionne également comme un détecteur de valeur de seuil et comme un interrupteur.

FIG.1

TRANSMITTER/RECEIVER

TRANSPONDER

RESPONDER

FIG.2

TRANSPONDER

FIG.3

EP 0 299 557 B1

FIG.4

FIG.5